# EUROPEAN PATENT APPLICATION

(11) **EP 3 708 470 A1**
(43) Date of publication of application: **16.09.2020**
(21) Application number: 20161068.0
(22) Date of filing: 05.03.2020
(51) Int. Cl.: B62D 25/04, B62D 25/06

(54) **VEHICLE BODY UPPER STRUCTURE, VEHICLE BODY, AND VEHICLE**

(30) Priority: 14.03.2019 JP 2019047328
(71) Applicant: Mazda Motor Corporation, Hiroshima 730-8670 (JP)
(72) Inventor: KIYOSHITA, Daisuke, Aki-gun,, Hiroshima 730-8670 (JP); NAKAMURA, Takeshi, Aki-gun,, Hiroshima 730-8670 (JP)
(74) Representative: Müller-Boré & Partner Patentanwälte PartG mbB

(57) **Abstract**

The vehicle body upper structure includes: a pair of first structures (front pillars) 2; a second structure (a front header) 3 that is joined to the first structures 2 so as to define a window opening 4 in cooperation with the first structures 2; and a damping glue 22. The second structure 3 includes: first components (lower side members) 7, each of which is joined to the respective first structures 2; and a second component (a lower center member) 8 that extends in a width direction W of a vehicle body 1 and, at a position away from portions joined to the first structures 2, is joined to the first structures 2 in an overlapping state with parts of the first components 7. At an end 8a on the first structure 2 side in an overlapping portion 15 with the second component 8, each of the first components 7 is joined to the second component 8 via the damping glue 22.

## Description

### [Technical Field]

The present invention relates to a vehicle body upper structure, a vehicle body, and a vehicle.

### [Background Art]

In a normal vehicle, a windshield is joined to an opening that is formed in an upper front portion or an upper rear portion of a vehicle body by adhesion. In such a vehicle body upper structure, a vibration generated in a wheel or a powertrain is transmitted to the windshield via a vehicle body frame during travel of the vehicle. As a result, the windshield vibrates, and the vibration thereof is possibly transmitted as noise to the inside of a cabin.

In order to suppress transmission of the vibration to the windshield, in a vehicle body structure disclosed in Patent document 1, an adhesive having a vibration damping property is used to adhere the windshield to the vehicle body frame. The adhesive having the vibration damping property has a function of damping the vibration by converting vibration energy into thermal energy.

In a vehicle body structure disclosed in Patent document 2, a rear header member that defines a windshield opening in the vehicle body frame and a rear-pillar side block are adhered to each other by the adhesive having the vibration damping property, so as to suppress the transmission of the vibration to the windshield.

### [Prior Art Documents]

### [Patent documents]

[Patent document 1] JP-A-2010-125980
[Patent document 2] JP-A-2011-93449

### [Summary of the Invention]

### [Problem to be solved by the invention]

In both of the above vehicle body upper structures, the transmission of the vibration to the windshield is suppressed by using the adhesive having the vibration damping property. By the way, in order to improve steering stability of the vehicle, it is necessary to improve rigidity of the vehicle body. In the vehicle body upper structure, it is necessary to improve rigidity of a roof side rail, a front pillar, a front header, and the like. However, in the case where rigidity of components, such as the front pillar and the front header, for defining the opening, to which the windshield is joined, is improved, the components themselves are likely to function as vibration transmission paths. As a result, it is concerned that improvement in an effect of suppressing the transmission of the vibration to the windshield by the adhesive becomes difficult.

The present invention has been made in view of the above circumstance and therefore has a purpose of improving an effect of suppressing transmission of a vibration to a windshield while securing rigidity of a vehicle body.

### [Means for solving the Problem]

The invention is defined by the independent claim. Preferable embodiments are defined in dependent claims.

In order to solve the above problem, a vehicle body upper structure according to the present invention includes: a pair of first structures that constitute portions on both sides in a width direction of a vehicle body in an upper portion of the vehicle body; and a second structure that extends in the width direction and is joined to the first structures so as to define at least a part of a window opening, to which a windshield can be attached in cooperation with the first structures. The second structure includes: a pair of first components, each of which is joined to the respective first structures; and a second component that extends in the width direction and, at positions away from portions joined to the first structures, is joined to the first components in a partially overlapping state therewith. At an end on the first structure side in an overlapping portion with the second component, each of the first components is joined to the second component via a damping member.

In such a configuration, the second structure that defines at least the part of the window opening in cooperation with the first structures includes: the first components, each of which is joined to the respective first structures; and the second component. In each of the first components, rigidity is partially increased in the overlapping portion in which the first component overlaps and is joined to the second component. Meanwhile, in a portion in which the first component does not overlap the second component, the rigidity is relatively lower than that of the overlapping portion.

Accordingly, as described above, at the end on the first structure side in the overlapping portion with the second component, each of the first components is joined to the second component via the damping member. In this way, the portion of each of the first components that does not overlap the second component can also be joined to the second component via the damping member within a range of the overlapping portion.

In such a configuration, a vibration that is transmitted from the first structure to the second structure is first concentrated in the low-rigid portion where the first component of the second structure does not overlap the second component. Since this portion is joined to the second component by the damping member as described above, the vibration that is concentrated in this portion is effectively damped by the damping member. Meanwhile, the rigidity of the second structure can be secured by the high-rigid overlapping portion where the first component and the second component overlap and are joined to each other. As a result, it is possible to improve an effect of suppressing the transmission of the vibration to the windshield by the damping member while securing the rigidity of the vehicle body.

Particularly, the damping member is a damping glue.

Further particularly, the damping member is configured to damp a vibration.

Further particularly, the damping member is configured to convert vibration energy into thermal energy.

In the vehicle body upper structure described above, each of the first components is particularly or preferably joined to the respective first structures by the damping member, a damping member or another damping member .

According to such a configuration, the low-rigid portion of the first component that does not overlap the second component is joined to the first structure and the second component via the damping members. Thus, it is possible to further effectively damp the vibration concentrated in this portion by the damping members at two positions.

In the vehicle body upper structure described above, at a position away from the overlapping portion, the second component particularly or preferably has a reinforced portion, rigidity of which is partially higher than another portion of the second component.

According to such a configuration, the reinforced portion having the high rigidity is provided at the position away from the joined portion of the second component to the first component. Thus, it is possible to improve the rigidity of not only the second component but also the entire second structure including the second component.

Particularly, at a position away from the overlapping portion, the second component has a reinforced portion, which has a rigidity at least partially higher than a rigidity of another portion of the second component.

In the vehicle body upper structure described above, the second component is particularly or preferably constructed of a plate-shaped member, and the reinforced portion is particularly or preferably a portion that is deformed to bend the plate-shaped member in a plate thickness direction of the plate-shaped member

According to such a configuration, it is possible to easily form the reinforced portion by processing the plate-shaped member by pressing or the like.

Further particularly, a vehicle body includes the above vehicle body upper structure.

Further particularly, a vehicle includes the above vehicle body.

### [Advantage]

According to the vehicle body upper structure of the present invention, it is possible to improve the effect of suppressing the transmission of the vibration to the windshield by the damping member while securing the rigidity of the vehicle body.

### [Brief Description of the Drawings]

[Fig. 1] Fig. 1 is an entire perspective view of a vehicle body upper structure.
[Fig. 2] Fig. 2 is an enlarged perspective view in which a joined portion between a front pillar and a front header illustrated in Fig. 1 and a portion around the joined portion are enlarged.
[Fig. 3] Fig. 3 is a perspective view for illustrating a state where the front header illustrated in Fig. 2 is exploded.
[Fig. 4] Fig. 4 is a cross-sectional view that is taken along line IV-IV in Fig. 2.
[Fig. 5] Fig. 5 is a perspective view for illustrating arrangement of adhesives when the front header illustrated in Fig. 2 is seen from above.
[Fig. 6] Fig. 6 is a perspective view for illustrating the arrangement of the adhesives when the front header illustrated in Fig. 2 is seen from below.
[Fig. 7] Fig. 7 is a cross-sectional view that is taken along line VII-VII in Fig. 2.
[Fig. 8] Fig. 8 is a cross-sectional view that is taken along line VIII-VIII in Fig. 2.
[Fig. 9] Fig. 9 is a plan view of an upper member in Fig. 3.
[Fig. 10] Fig. 10 is a view in which a state of combining a lower side member and a lower center member illustrated in Fig. 3 is seen from below.

A detailed description will hereinafter be made on a preferred embodiment of the present invention with reference to the accompanying drawings.

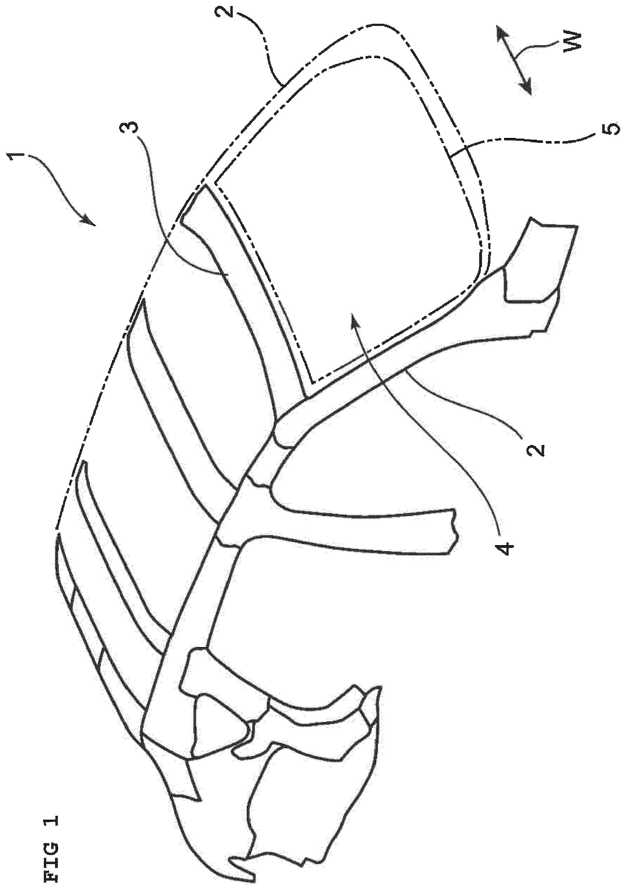

As the embodiment, an upper structure of a vehicle body 1 illustrated in Figs. 1 to 4 relates to a structure that defines a window opening 4, to which a front-side windshield 5 can be attached, and includes: a pair of front pillars 2 as a pair of first structures; a front header 3 as a second structure; damping glues 21, 23, each of which joins the front header 3 to the front pillar 2; and a damping glue 22 that joins components (a lower side member 7 and a lower center member 8), which will be described later, in the front header 3.

The damping glues 21, 22, 23 are particularly included as damping members in the present invention and only need to have a function of damping a vibration by converting vibration energy into thermal energy. A material and a physical property of each of the damping glues are not particularly limited in the present invention. As each of the damping glues 21, 22, 23, for example, a sealer or a rubber-based adhesive that is frequently used in a hemmed portion between an outer panel and an inner panel of a vehicle body is used. Such an adhesive or the like has a vibration damping characteristic when a storage modulus is equal to or lower than 500 MPa and a loss coefficient is equal to or higher than 0.2 under conditions that a temperature is 20 °C and a frequency of an excitation force is 30 Hz.

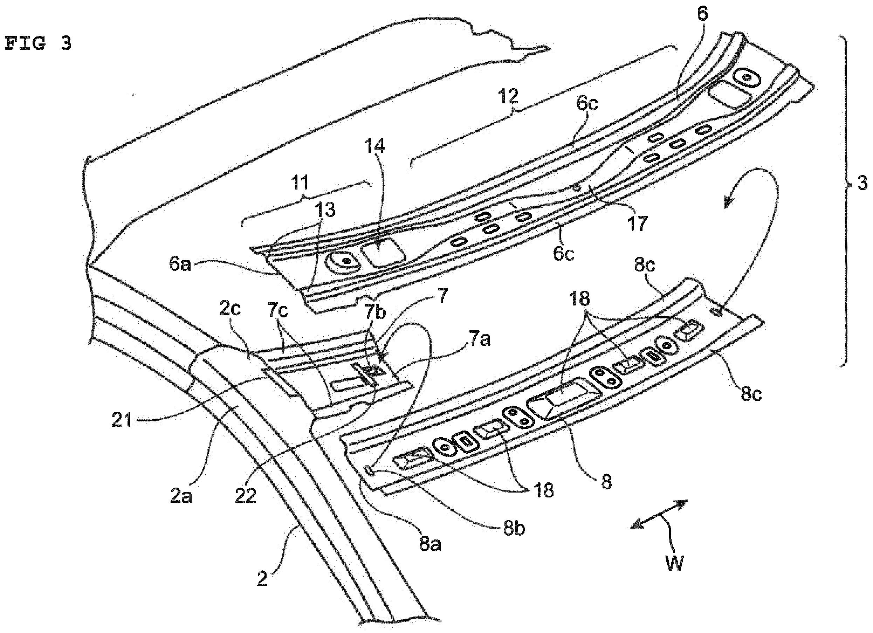

The front pillars 2 are the structures that constitute portions on both sides of the vehicle body 1 in a width direction W in an upper portion, or a top portion, of the vehicle body 1. Each of the front pillars 2 is a long member that extends in an upward direction toward the rear of the vehicle body 1. As illustrated in Figs. 3 to 4, each of the front pillars 2 particularly includes: an outer member 2a that faces an outer side of the vehicle body 1; an inner member 2b that faces an inner side of the vehicle body 1; and a projected portion 2c that is projected inward in the width direction W of the vehicle body 1 from an upper end of the outer member 2a.

As illustrated in Figs. 1 to 2, the front header 3 is a structure that is arranged on an upper front side of the vehicle body 1, extends in the width direction W of the vehicle body 1, and is joined to the front pillars 2 so as to define at least a part of the window opening 4, to which the front-side windshield 5 can be attached, in cooperation with the front pillars 2. The windshield 5 is joined to a portion projected inward of the window opening 4 that is formed by the front pillars 2 and the front header 3, for example, a flange 6c (see Fig. 3) of an upper member 6, which will be described later, and the like by the damping glue (not illustrated).

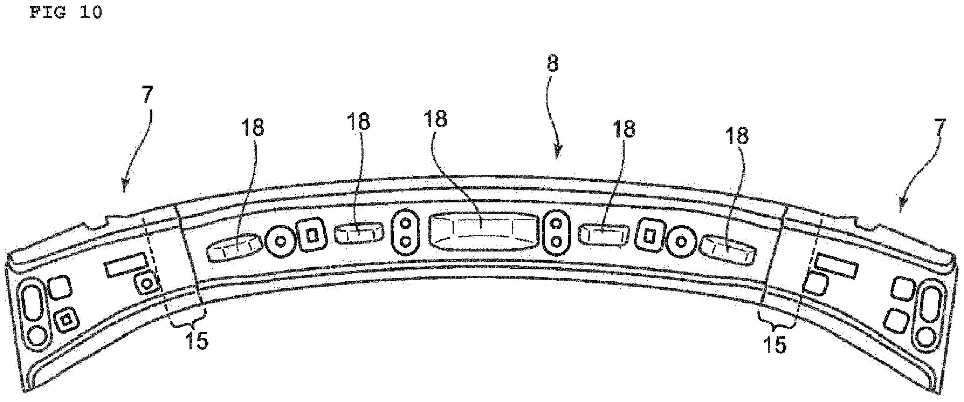

As illustrated in Figs. 3 to 6, the front header 3 is particularly constructed of: the upper member 6 that constitutes an upper surface of the front header 3; a pair of the lower side members 7 (see Fig. 10) as a pair of first components that constitutes portions on both sides of a lower surface of the front header 3; and the lower center member 8 as a second component that constitutes a lower central portion of the front header 3.

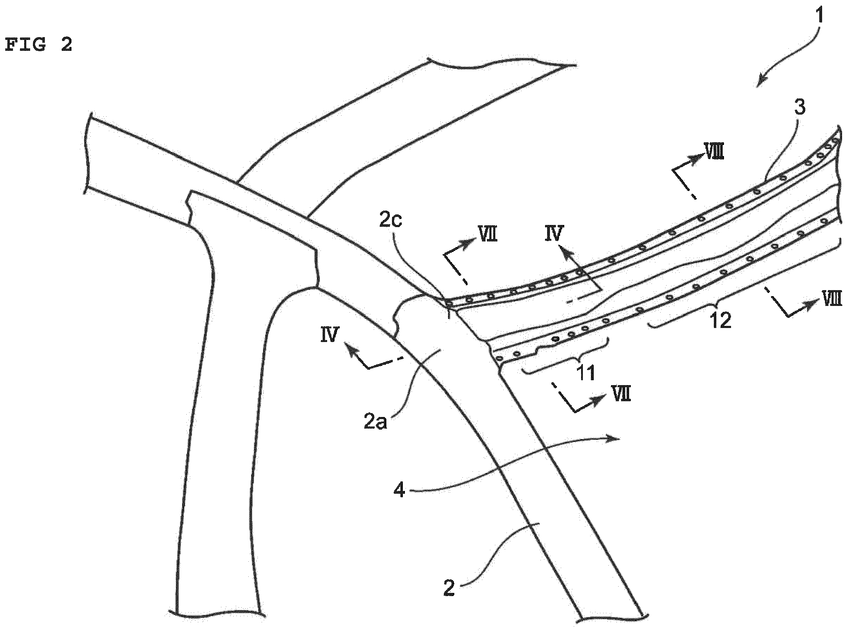

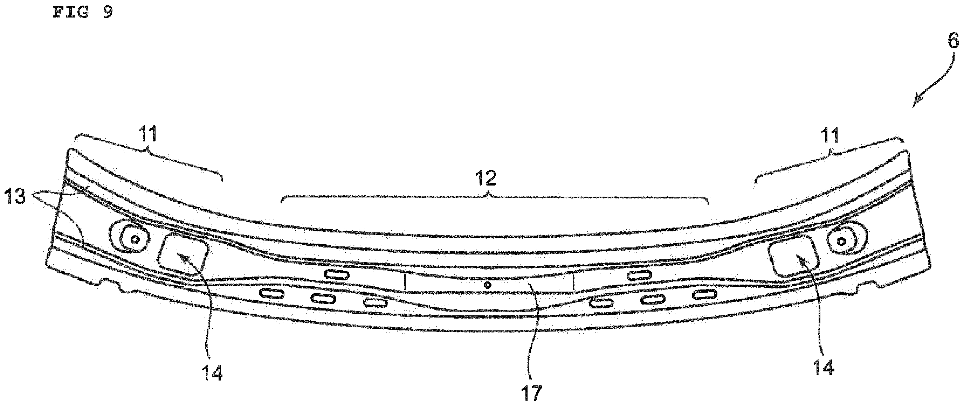

As illustrated in Figs. 2 to 5 and Fig. 9, the upper member 6 is particularly formed of a plate-shaped member such as a thin metal plate, and is a long member that extends to connect the front pillars 2.

Each of the lower side members 7 and the lower center member 8 is also formed of the plate-shaped member such as the thin metal plate.

In the upper structure of the vehicle body 1 in this embodiment, the upper member 6 and the front header 3 including the upper member 6 particularly include: a low-rigid portion 11 in which a portion at an end 6a of the upper member 6 is joined to the projected portion 2c of each of the front pillars 2; and a high-rigid portion 12 that is arranged at a position away from the portion (the end 6a) where the low-rigid portion 11 is joined to the front pillar 2 and is more rigid than the low-rigid portion 11.

The upper member 6 has plural (two or more, particularly two in this embodiment) ridgeline portions 13, each of which extends in a longitudinal direction of the front header 3 (that is, the same direction as the width direction W). Each of the ridgeline portions 13 is particularly constructed of a projection that extends in the longitudinal direction of the front header 3. Note that the three or more ridgeline portions 13 may be provided.

As illustrated in Fig. 3 and Figs. 7 to 8, each of the projections constituting the ridgeline portions 13 is constructed of a portion of the upper member 6 that is deformed to bend the upper member 6 upward in a plate thickness direction. Accordingly, each of the ridgeline portions 13 has a projected shape that extends in a longitudinal direction of the upper member 6.

As illustrated in Figs. 3 to 5, the end 6a of the upper member 6 in the low-rigid portion 11 is particularly joined to the projected portion 2c, which is projected inward in the width direction W of the vehicle body 1, in the front pillar 2 by the damping glue 21. The end 6a of the upper member 6 is further welded at welding points S to the projected portion 2c by spot welding.

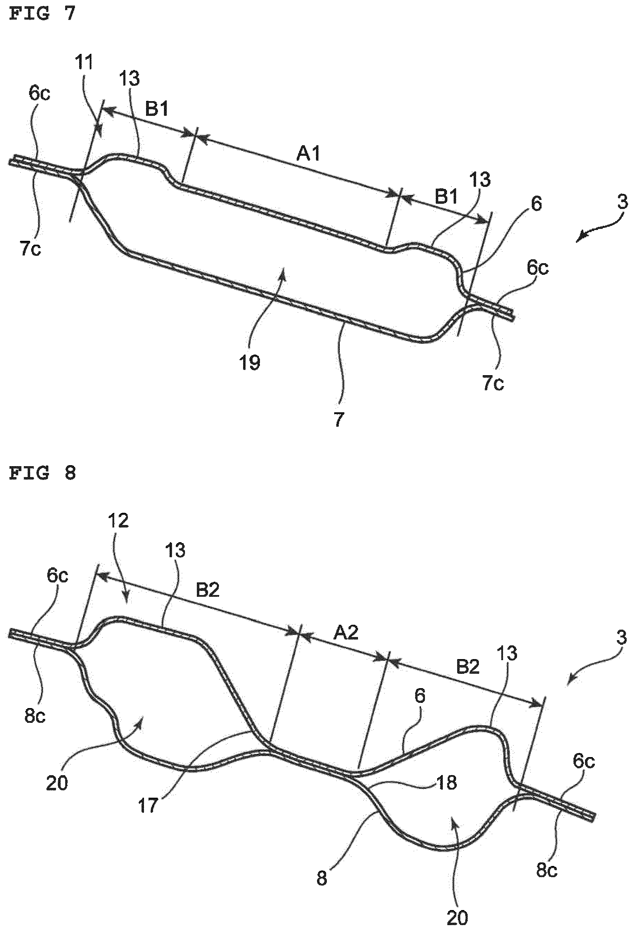

In the upper member 6, as illustrated in Fig. 2 and Fig. 7, the low-rigid portion 11 of the front header 3 has a portion formed such that a distance between the plural ridgeline portions 13 becomes a specified first distance A1.

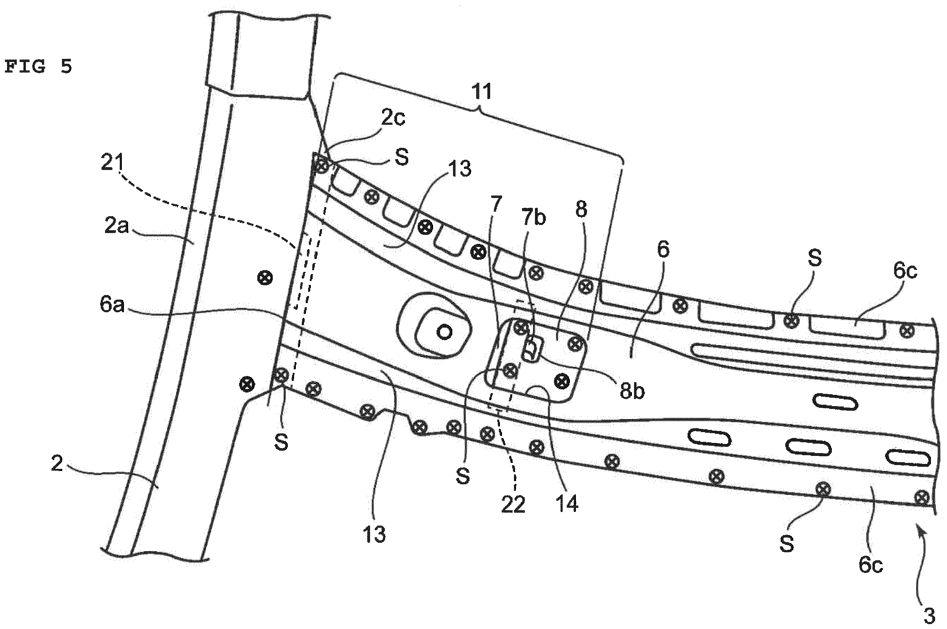

In this embodiment, as illustrated in Fig. 7, the low-rigid portion 11 of the front header 3 has a closed cross section 19 that has the longitudinal direction of the front header 3 as a normal direction. As illustrated in Figs. 5 to 7, the closed cross section 19 is formed when the flanges 6c, 7c of the upper member 6 and the lower side member 7 constituting the front header 3 overlap each other and the flanges 6c, 7c are particularly welded at the plural welding points S by spot welding.

Furthermore, in this embodiment, as illustrated in Figs. 3 to 5 and Fig. 9, the low-rigid portion 11 of the upper member 6 has an opening 14 that is formed in a part of a portion constituting the closed cross section 19.

As illustrated in Fig. 2 and Fig. 8, in the upper member 6, the high-rigid portion 12 of the front header 3 has a portion formed such that the distance between the plural ridgeline portions 13 becomes a second distance A2 shorter than the first distance A1 (see Fig. 7) between the ridgeline portions 13 in the low-rigid portion 11. In addition, in this embodiment, a width B2 of each of the plural ridgeline portions 13 in the high-rigid portion 12 is greater than a width B1 (see Fig. 7) of each of the ridgeline portions 13 in the low-rigid portion 11.

The high-rigid portion 12 has plural (two or more, particularly two in this embodiment) closed cross sections 20, each of which has the longitudinal direction as the normal direction. As illustrated in Figs. 5 to 6 and Fig. 8, the plural closed cross sections 20 are formed when the flanges 6c, 8c of the upper member 6 and the lower center member 8 constituting the front header 3 overlap each other and the flanges 6c, 8c are welded at the plural welding points S by spot welding.

A portion between the plural closed cross sections 20 in the high-rigid portion 12 is defined when a bulged portion 18, which is formed when a portion at an intermediate position of the lower center member 8 is projected upward, and a bulged portion 17, which is particularly formed when a portion at an intermediate position of the upper member 6 is recessed downward, abut each other. The high-rigid portion 12, which has the plural closed cross sections 20 as described above, is reinforced by the bulged portions 17, 18 forming the plural closed cross sections 20. Thus, rigidity of the high-rigid portion 12 is higher than that of the low-rigid portion 11 only having the single closed cross section 19.

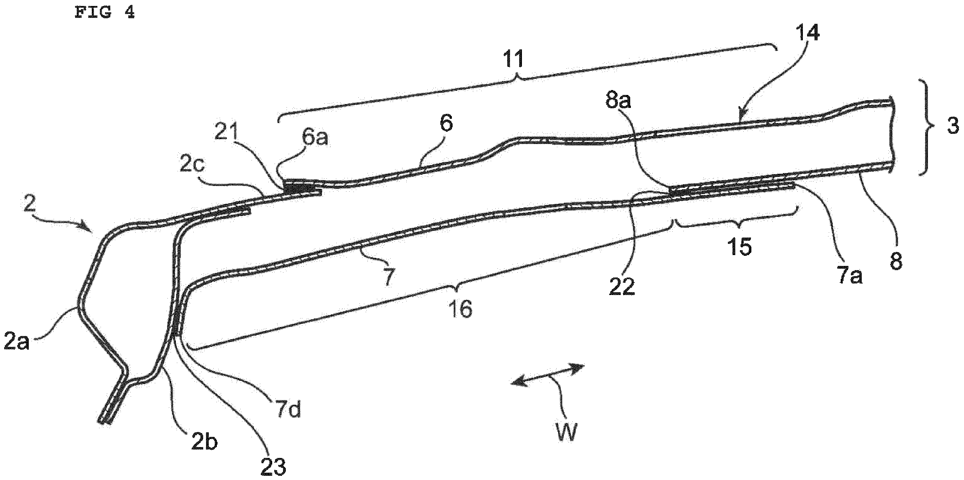

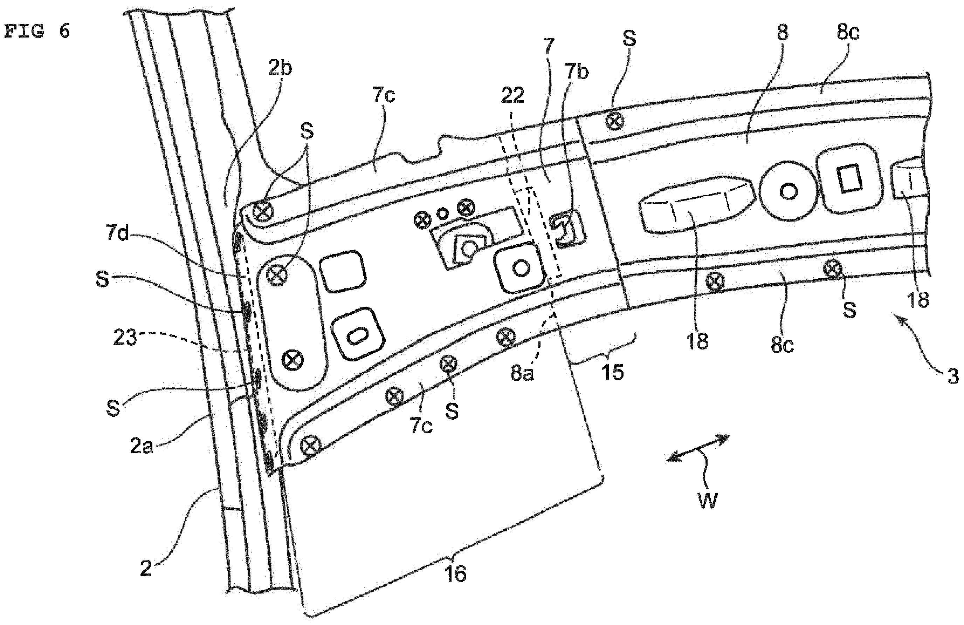

In addition, in this embodiment, as illustrated in Fig. 4 and Fig. 6, an outer end 7d of each of the lower side members 7 in the width direction W of the vehicle body 1 is particularly joined to the respective inner members 2b of the front pillars 2 by the damping glue 23. Furthermore, the lower side member 7 is joined at the plural welding points S to the inner member 2b by spot welding.

Particularly or preferably, the lower side member 7 is brought into a joined state to the front pillar 2 in advance as illustrated in Fig. 3 by the adhesion using the damping glue 23 (see Fig. 4 and Fig. 6) and spot welding, and the lower center member 8 and the upper member 6 are thereafter joined to the lower side member 7. In this case, as illustrated in Figs. 4 to 5, in a sub-assembly state where the lower center member 8 and the upper member 6 are combined together in advance, the lower center member 8 may be joined to the lower side member 7 by the damping glue 22 and may also be welded at the welding points S to the lower side member 7 by spot welding through the opening 14 of the upper member 6. Alternatively, even in the case where the lower center member 8 and the upper member 6 are not brought into the sub-assembly state, the lower center member 8 may be joined to the lower side member 7, and then the lower side member 8 may additionally be welded to the lower side member 7 by spot welding through the opening 14 of the upper member 6.

The lower center member 8 is a long member that extends in the width direction W of the vehicle body 1. As illustrated in Fig. 4 and Fig. 6, at a position of an overlapping portion 15 away from the portion, which is joined to the front pillar 2, in the lower side member 7 of the front header 3 (the outer end 7d in the width direction W of the lower side member 7), the lower center member 8 is joined to each of the lower side members 7 in a partially overlapping state.

More specifically, an end 8a of the lower center member 8 overlaps the end 7a of the lower side member 7 from above, and an engagement projection 7b near the end 7a is engaged with an engagement hole 8b near the end 8a. In this way, the overlapping portion 15 illustrated in Fig. 4 is formed. Then, at an end on the front pillar 2 side in the overlapping portion 15 with the lower center member 8 (more specifically, a portion near the end 8a of the lower center member 8), the lower side member 7 is joined to the lower center member 8 via the damping glue 22. Furthermore, in the overlapping portion 15, the lower center member 8 is welded at the plural welding points S to the lower side member 7 by spot welding. Spot welding between the lower side member 7 and the lower center member 8 is performed through the opening 14 of the upper member 6 illustrated in Fig. 5.

In this embodiment, as illustrated in Fig. 6 and Fig. 10, at a position away from the overlapping portion 15 in each of the ends of the lower center member 8, the lower center member 8 has the bulged portion 18 as a reinforced portion, rigidity of which is partially higher than the other portions of the lower center member 8.

The bulged portion 18 is particularly a portion deformed to bend the plate-shaped member constituting the lower center member 8 in the plate thickness direction of the plate-shaped member (in this embodiment, in an upward direction of the lower center member 8). In this embodiment, the plural bulged portions 18 are formed along a longitudinal direction of the lower center member 8. The bulged portion 18, which is formed at the intermediate position in the longitudinal direction of the lower center member 8, is formed to have the largest projection amount.

When it is considered that the above damping glues 21, 22, 23 are used together with spot welding at the welding spots S as in this embodiment, an adhesive with a lower adhesive force than an adhesive used to join the windshield 5 to an edge of the window opening 4 may be adopted as each of the damping glues 21, 22, 23.

In the above embodiment, the description has been made on the structure of defining the window opening 4, to which the front-side windshield 5 can be attached, as the one example of the vehicle body upper structure according to the present invention. However, the present invention is not limited thereto. The vehicle body upper structure according to the present invention can also be applied to a structure of defining a window opening for a rear windshield or a window opening for a sun roof in a sedan or the like.

### (Characteristics of this embodiment)

(1) The upper structure of the vehicle body 1 in this embodiment includes: the pair of the front pillars 2 as the first structures; the front header 3 as the second structure; and the damping glue 22 (see Figs. 3 to 6) that joins the lower side members 7 (the first components) and the lower center member 8 (the second component) as the components of the front header 3.
   As illustrated in Figs. 3 to 4 and Fig. 6, each of the lower side members 7 is joined to the respective front pillars 2. The lower center member 8 extends in the width direction W of the vehicle body 1, and, at the position away from the portion (the outer end 7d in the width direction W of the lower side member 7), which is joined to the front pillar 2, is joined to each of the lower side members 7 in the partially overlapping state. At the end on the front pillar 2 side in the overlapping portion 15 with the lower center member 8 (in this embodiment, in the portion near the end 8a of the lower center member 8), the lower side member 7 is joined to the lower center member 8 via the damping glue 22.
   In this configuration, the front header 3, which defines at least the part of the window opening 4 in cooperation with the pair of the front pillars 2, includes: the pair of the lower side members 7 joined to the pair of the front pillars 2; and the lower center member 8. In each of the lower side members 7, the rigidity is partially increased in the overlapping portion 15 in which the lower side member 7 overlaps and is joined to the lower center member 8. Meanwhile, in a portion 16 (see Fig. 4 and Fig. 6) where the lower side member 7 does not overlap the lower center member 8, the rigidity is relatively lower than that of the overlapping portion 15.
   Accordingly, as described above, at the end on the front pillar 2 side in the overlapping portion 15 with the lower center member 8 (in the portion near the end 8a of the lower center member 8), the lower side member 7 is joined to the lower center member 8 via the damping glue 22. In this way, the portion 16, which does not overlap the lower center member 8, in the lower side member 7 can also be joined to the lower center member 8 via the damping glue 22 within a range of the overlapping portion 15.
   In such a configuration, the vibration transmitted from the front pillar 2 to the front header 3 is first concentrated in the low-rigid portion 16 (see Fig. 4 and Fig. 6), which does not overlap the lower center member 8, in the lower side member 7 of the front header 3. This low-rigid portion 16 is joined to the lower center member 8 by the damping glue 22 as described above. Thus, the vibration that is concentrated in this low-rigid portion 16 is effectively damped by the damping glue 22. Meanwhile, the rigidity of the front header 3 can be secured by the high-rigid overlapping portion 15 where the lower side member 7 overlaps and is joined to the lower center member 8. As a result, it is possible to improve the effect of suppressing the transmission of the vibration to the windshield 5 by the damping glues 22 while securing the rigidity of the vehicle body 1.
(2) In the upper structure of the vehicle body 1 in this embodiment, the outer end 7d in the width direction W of the lower side member 7 is joined to the front pillar 2 by the damping glue 23.
   In this configuration, the low rigid portion 16, which does not overlap the lower center member 8, in the lower side member 7 is joined to the front pillar 2 and the lower center member 8 via the damping glues 22, 23, respectively. Thus, it is possible to further effectively damp the vibrations concentrated in this portion by the damping glues 22, 23 at the two positions.
(3) In the upper structure of the vehicle body 1 in this embodiment, as illustrated in Fig. 6 and Fig. 10, at the position away from the overlapping portion 15, the lower center member 8 has the bulged portion 18 as the reinforced portion, the rigidity of which is partially higher than the other portions of the lower center member 8.
   In this configuration, in the lower center member 8, the bulged portion 18 as the reinforced portion having the high rigidity is provided at the position away from the joined portion (the overlapping portion 15) to the lower side member 7. Thus, it is possible to improve the rigidity of not only the lower center member 8 but also the entire front header 3 including the lower center member 8.
(4) In the upper structure of the vehicle body 1 in this embodiment, the lower center member 8 is constructed of the plate-shaped member. The bulged portion 18 as the reinforced portion is the portion that is deformed to bend the plate-shaped member in the plate thickness direction of the plate-shaped member. In this configuration, it is possible to easily form the bulged portion 18 as the reinforced portion in the lower center member 8 by processing the plate-shaped member by pressing or the like.
(5) The upper structure of the vehicle body 1 in this embodiment includes: the pair of the front pillars 2 as the first structures; the front header 3 as the second structure; and the damping glues 21, 23 (see Figs. 3 to 6) that join the front header 3 to the front pillars 2.
   The front header 3 includes: the low-rigid portion 11 that is joined to the projected portion 2c of each of the front pillars 2; and the high-rigid portion 12 that is arranged at the position away from the portions (the ends 6a, 7a) where the low-rigid portion 11 is joined to the front pillar 2 and is more rigid than the low-rigid portion 11.
   As illustrated in Fig. 4, the low-rigid portion 11 in this embodiment is joined to the front pillar 2 by the damping glues 21, 23.
   In such a configuration, the upper member 6 and the front header 3 including the upper member 6, which define at least the part of the window opening 4 in cooperation with the front pillars 2, include the low-rigid portions 11 (see Figs. 2 to 6, Fig. 7, and Fig. 9), each of which is joined to the front pillar 2. Accordingly, the vibration that is transmitted from the front pillar 2 to the front header 3 is first input to the low-rigid portion 11 of the front header 3 from both of the upper member 6 and the lower side member 7 of the front header 3, and the vibration is concentrated in the low-rigid portion 11. The low-rigid portion 11 of the front header 3 in this embodiment is joined to the front pillar 2 by the damping glue 21 between the upper member 6 and the projected portion 2c of the front pillar 2 and the damping glue 23 between the lower side member 7 and the inner member 2b of the front pillar 2. Thus, the vibration that is concentrated on the low-rigid portion 11 is effectively damped by the damping glues 21, 23. Meanwhile, in the upper member 6 and the front header 3 including the upper member 6, the high-rigid portion 12 is arranged at the position away from the portion (the ends 6a, 7d) where the low-rigid portion 11 is joined to the front pillar 2. Thus, it is possible to secure the rigidity of the front header 3. As a result, it is possible to improve the effect of suppressing the transmission of the vibration to the windshield 5 by the damping glues 21, 23 while securing the rigidity of the vehicle body 1.
(6) In the upper structure of the vehicle body 1 in this embodiment, as illustrated in Fig. 3, Fig. 5, and Figs. 7 to 9, the front header 3 has the plural ridgeline portions 13, each of which extends in the longitudinal direction of the front header 3, in the upper member 6. The low-rigid portion 11 has the portion formed such that the distance between the plural ridgeline portions 13 becomes the specified first distance A1. The high-rigid portion 12 has the portion formed such that the distance between the plural ridgeline portions 13 becomes the shorter second distance A2 than the first distance A1.
   In this configuration, the low-rigid portion 11 and the high-rigid portion 12 can easily be formed in the front header 3 by simply changing the distance A1 between the ridgeline portions 13 illustrated in Fig. 7 is changed to the distance A2 between the ridgeline portions 13 illustrated in Fig. 8. In addition, the front header 3 can easily be designed such that the low-rigid portion 11 and the high-rigid portion 12 each has the desired rigidity.
   In this embodiment, tie width B2 between the plural ridgeline portions 13 in the high-rigid portion 12 is greater than the width B1 (see Fig. 7) between the ridgeline portions 13 in the low-rigid portion 11. Thus, each of the ridgeline portions 13 in the high-rigid portion 12 has the improved rigidity when compared to the ridgeline portions 13 in the low-rigid portion 11. As a result, the rigidity of the high-rigid portion 12 is further improved.
(7) In the upper structure of the vehicle body 1 in this embodiment, each of the ridgeline portions 13 is constructed of the projection that extends in the longitudinal direction of the front header 3. Accordingly, each of the ridgeline portions 13 can be constructed by forming the projection, which extends in the longitudinal direction of the front header 3, in the upper member 6 of the front header 3. Thus, the ridgeline portions 13 can easily be designed and processed.
(8) In the upper structure of the vehicle body 1 in this embodiment, the front header 3 has the upper member 6 that is constructed of the plate-shaped member extending to connect the front pillars 2. Each of the projections constituting the ridgeline portions 13 is the portion that is deformed to bend the upper member 6 in the plate thickness direction.
   In this configuration, it is possible to easily form the projection constituting the ridgeline portion 13 by processing the upper member 6, which is formed of the plate-shaped member such as the thin metal plate, by pressing or the like.
(9) In the upper structure of the vehicle body 1 in this embodiment, the high-rigid portion 12 has the bulged portion 17 that is formed when the upper member 6 formed of the plate-shaped member is recessed downward. Accordingly, it is possible to improve the rigidity while suppressing the upward projection of the high-rigid portion 12 and the front header 3 (particularly, the upper member 6) including the high-rigid portion 12.
(10) In the upper structure of the vehicle body 1 in this embodiment, the low-rigid portion 11 illustrated in Fig. 7 has the closed cross section 19 that has the longitudinal direction of the front header 3 as the normal direction. The high-rigid portion 12 illustrated in Fig. 8 has the plural (two) closed cross sections 20, each of which has the longitudinal direction of the high-rigid portion 12 as the normal direction.
   In this configuration, the low-rigid portion 11 and the high-rigid portion 12 can be constructed by changing the number of the closed cross sections 19, 20. Thus, it is unnecessary to significantly change outer dimensions of each of the closed cross sections 19, 20 in the low-rigid portion 11 and the high-rigid portion 12. As a result, it is possible to reduce an influence on shapes and arrangement of components (a roof panel and the like) of the vehicle body 1 that are arranged around the front header 3.
   Note that, although the high-rigid portion 12 illustrated in Fig. 8 has the two closed cross sections 20, the present invention is not limited thereto, and the high-rigid portion 12 may have the three or more closed cross sections.
(11) In the upper structure of the vehicle body 1 in this embodiment, the low-rigid portion 11 illustrated in Figs. 3 to 5 and Fig. 9 has the opening 14 that is formed in the part of the portion constituting the closed cross section 19. When the opening 14 is formed in the part of the closed cross section 19 in the low-rigid portion 11, just as described, it is possible to further reduce the rigidity of the low-rigid portion 11. In this way, the vibration can further be concentrated in the low-rigid portion 11, and it is possible to further improve the effect of suppressing the transmission of the vibration to the windshield 5 by the damping glues 21, 23 (particularly, the damping glue 21 on the upper member 6 side).

### [Description of Reference Signs and Numerals]

- 1:: Vehicle body
- 2:: Front pillar (first structure)
- 3:: Front header (second structure)
- 4:: Window opening
- 5:: Windshield
- 6:: Upper member
- 7:: Lower side member (first component)
- 8:: Lower center member (second component)
- 11:: Low-rigid portion
- 12:: High-rigid portion
- 13:: Ridgeline portion
- 14:: Opening
- 15:: Overlapping portion
- 16:: Non-overlapping portion
- 17, 18:: Bulged portion
- 19, 20:: Closed cross section
- 21, 22, 23:: Damping glue

## Claims

1. A vehicle body upper structure comprising:
a pair of first structures (2) that constitute portions on both sides in a width direction (W) of a vehicle body (1) in an upper portion of the vehicle body (1); and
a second structure (3) that extends in the width direction (W) and is joined to the first structures (2) so as to define at least a part of a window opening (4), to which a windshield (5) can be attached in cooperation with the first structures (2), wherein
the second structure (3) includes: a pair of first components (7), each of which is joined to the respective first structures (2); and a second component (8) that extends in the width direction (W) and, at positions away from portions joined to the first structures (2), is joined to the first components (7) in a partially overlapping state therewith, and
at an end (8a) on the first structure (2) side in an overlapping portion (15) with the second component (8), each of the first components (7) is joined to the second component (8) via a damping member (22).

2. The vehicle body upper structure according to claim 1, wherein
the damping member (22) is a damping glue.

3. The vehicle body upper structure according to claim 1 or 2, wherein
the damping member (22) is configured to damp a vibration.

4. The vehicle body upper structure according to any one of the preceding claims, wherein
the damping member (22) is configured to convert vibration energy into thermal energy.

5. The vehicle body upper structure according to any one of the preceding claims, wherein
each of the first components (7) is joined to the respective first structures (2) by a damping member (21, 23) .

6. The vehicle body upper structure according to any one of the preceding claims, wherein
at a position away from the overlapping portion (15), the second component (8) has a reinforced portion, which has a rigidity at least partially higher than a rigidity of another portion of the second component (8).

7. The vehicle body upper structure according to claim 6, wherein
the second component (8) is constructed of a plate-shaped member, and
the reinforced portion is a portion that is deformed to bend the plate-shaped member in a plate thickness direction of the plate-shaped member.

8. A vehicle body (1) comprising the vehicle body upper structure according to any one of the preceding claims.

9. A vehicle comprising the vehicle body (1) according to claim 8.
